# EUROPÄISCHE PATENTSCHRIFT

(11) **EP 1 495 905 B1**
(45) Veröffentlichungstag und Bekanntmachung des Hinweises auf die Patenterteilung: **10.09.2014**
(21) Anmeldenummer: 04015602.8
(22) Anmeldetag: 02.07.2004
(51) Int. Cl.: B60L 11/18

(54) **Flurförderzeug mit einem elektrischen Antrieb und einem Brennstoffzellensystem und Verfahren zum Betrieb eines Flurförderzeugs**
Ground conveyor having an electric drive and a fuel cell system and method of operating a ground conveyor
Chariot de manutention avec un entraînement électrique et un système de pile à combustible et procédé d'opération d'un chariot de manutention

(30) Priorität: 08.07.2003 DE 10330815
(43) Veröffentlichungstag der Anmeldung: 12.01.2005
(73) Patentinhaber: STILL GmbH, 22113 Hamburg (DE)
(72) Erfinder: Kubusch, Dietmar, 21244 Buchholz (DE); Leifert, Torsten, Dr., 21360 Vögelsen (DE)
(74) Vertreter: Geirhos, Johann

(56) Entgegenhaltungen:
- EP-A1- 1 215 163
- WO-A2-02/067346
- US-A1- 2003 091 503

## Beschreibung

Die Erfindung betrifft ein Flurförderzeug mit einem elektrischen Antrieb und einem Brennstoffzellensystem, das eine Brennstoffzelleneinheit umfasst, die mit Wasserstoff als Brennstoff betrieben ist. Die Erfindung betrifft ebenso ein Verfahren zum Betrieb eines Flurförderzeugs mit einem elektrischen Antrieb und einem Brennstoffzellensystem, das eine Brennstoffzelleneinheit umfasst, die mit Wasserstoff als Brennstoff betrieben ist.

Flurförderzeuge dienen dem innerbetrieblichen Warentransport. Dies bedeutet häufig einen Einsatz in geschlossenen Gebäuden, wo ein emissionsfreier Betrieb gewährleistet werden muss. Bei Flurförderzeugen, die hauptsächlich im Innenbereich eingesetzt werden, wird daher zumeist ein Elektroantrieb verwendet, um einen emissionsfreien Betrieb zu ermöglichen. Als Energieversorgung für den elektrischen Antrieb werden zumeist Batterien verwendet, da hierbei eine ausgereifte Technik zur Verfügung steht. Insbesondere aufgrund des guten Wirkungsgrades gewinnt jedoch auch der Einsatz von Brennstoffzellen zunehmende Bedeutung. Diese werden zumeist mit Wasserstoff betrieben, dessen Lagerung sowohl stationär als auch in Fahrzeugen jedoch aufwändige Speichersysteme erfordert. Insbesondere der Betankungsvorgang der Brennstoffspeicher von Brennstoffzellenfahrzeugen erfordert einen großen Aufwand, sowohl was den Zeitbedarf betrifft als auch die dafür vorzuhaltenden Anlagen zur Wasserstoffgewinnung oder -speicherung. Eine dezentrale Versorgung einer Flotte von Flurförderzeugen ist bei diesem System besonders aufwändig, während eine zentrale Betankungsanlage insbesondere bei großen Betrieben unnötige Fahrwege und damit weitere Nutzungsausfälle bedingt.

Ein gattungsgemäßes Flurförderzeug ist aus der EP 1 215 163 A1 bekannt.

In der WO 02/067346 A2 ist ein Flurförderzeug beschrieben, bei dem eine Brennstoffzelleneinheit gegen einen Batterieblock ausgewechselt werden kann. Als Brennstoffspeicher kann ein austauschbarer Flüssiggastank (LPG-Tank) vorgesehen werden.

Aus der US 2003/0091503 A1 ist ein mit Wasserstoff betreibbares Brennstoffzellenfahrzeug beschrieben, bei dem auswechselbare Wasserstofferzeuger vorgesehen sind.

Der Erfindung liegt daher die Aufgabe zugrunde, ein Flurförderzeug mit einem elektrischen Antrieb und einem Brennstoffzellensystem zu schaffen, bei dem eine schnelle und einfache Ergänzung des Brennstoffvorrats vorgenommen werden kann. Aufgabe der Erfindung ist es weiterhin, ein Verfahren zum Betrieb eines Flurförderzeugs mit einem elektrischen Antrieb und einem Brennstoffzellensystem zu schaffen, bei dem die Ergänzung des Brennstoffvorrats schnell und einfach vorgenommen werden kann.

Die Aufgabe wird bezüglich des Flurförderzeugs erfindungsgemäß dadurch gelöst, dass mindestens ein einfach getrennt austauschbarer, als Wasserstoff-Brennstoffspeicher ausgebildeter Brennstoffspeicher vorgesehen ist. Anstatt den leeren Brennstoffspeicher zu befüllen, kann dieser einfach gegen einen vollen ausgetauscht werden. Ein Austausch kann schneller und einfacher bewerkstelligt werden als die Neubefüllung des Speichers. Es ist besonders vorteilhaft, wenn als Brennstoff Wasserstoff verwendet wird. Mit Wasserstoff betriebene Brennstoffzellen haben weite Verbreitung gefunden und sind ohne schädliche Emissionen betreibbar.

Es ist von besonderem Vorteil, wenn mindestens zwei Brennstoffspeicher vorgesehen sind, die gleichzeitig zur Brennstoffversorgung des Brennstoffzellensystems verwendbar sind. Dadurch ist es möglich, einen weiteren Speicher bei großem Leistungsbedarf zu aktivieren, so dass die Anschlussleitungen der Speicher jeweils kleiner ausgelegt werden können als wenn diese einzeln zur Deckung des maximalen Leistungsbedarfs eingesetzt werden würden.

Es ist ebenso vorteilhaft, wenn mindestens zwei Brennstoffspeicher vorgesehen sind, die wechselweise zur Brennstoffversorgung des Brennstoffzellensystems verwendbar sind. Dadurch kann, sobald ein Speicher leer ist, ein voller Speicher aktiviert werden um beispielsweise mit dem Flurförderzeug zu einer Stelle zu gelangen, an der der leere Speicher gegen einen vollen ausgetauscht werden kann. Weiterhin ist es möglich, Speicher mit unterschiedlichen Brennstoffen zu verwenden.

Vorteilhafterweise ist mindestens ein zur Brennstoffversorgung des Brennstoffzellensystems zu verwendender Brennstoffspeicher durch die Bedienperson auswählbar. Dadurch kann die Bedienperson den ihr am geeignetsten erscheinenden Speicher auswählen.

In einer besonders vorteilhaften Ausbildung ist mindestens ein zur Brennstoffversorgung des Brennstoffzellensystems zu verwendender Brennstoffspeicher selbsttätig auswählbar. Die Auswahl wird anhand der Betriebsituation automatisch vorgenommen, so dass die Bedienperson sich auf das Führen des Flurförderzeugs konzentrieren kann.

Es ist zweckmäßig, wenn die Auswahl des mindestens einen zur Brennstoffversorgung des Brennstoffzellensystems zu verwendenden Brennstoffspeichers in Abhängigkeit vom Füllstand mindestens eines Brennstoffspeichers vornehmbar ist. Dadurch kann ein leerer Speicher deaktiviert und ein voller Speicher zur Versorgung Brennstoffzellensystems ausgewählt werden.

In einer zweckmäßigen Ausbildung der Erfindung ist die Auswahl des mindestens einen zur Brennstoffversorgung des Brennstoffzellensystems zu verwendenden Brennstoffspeichers in Abhängigkeit vom Brennstoffbedarf des Brennstoffzellensystems vornehmbar. Dadurch wird ein hoher Brennstoffbedarf durch Aktivierung mehrerer Brennstoffspeicher abgedeckt.

Bezüglich des Verfahrens wird die Aufgabe dadurch gelöst, dass mindestens ein einfach sowie getrennt austauschbarer, als Wasserstoff-Brennstoffspeicher ausgebildeter Brennstoffspeicher am Einsatzort des Flurförderzeugs vorgehalten wird. Ist ein Brennstoffspeicher des Flurförderzeugs leer, kann dieser einfach gegen den vorgehaltenen gefüllten Speicher ausgetauscht werden. Der Austausch des Brennstoffspeichers erfolgt wesentlich schneller als das Befüllen. Die Standzeiten des Fahrzeugs sind dadurch wesentlich kürzer.

Es ist zweckmäßig, wenn eine Flotte von Flurförderzeugen betrieben wird. Als Flotte von Flurförderzeugen wird eine Anzahl von vorwiegend auf dem gleichen Betriebsgelände eingesetzten oder in sonstiger Weise hinsichtlich der betrieblichen Abläufe organisatorisch verknüpften Flurförderzeugen betrachtet. Bei mehreren solchen Fahrzeugen müssen im Verhältnis zur Anzahl der Fahrzeuge weniger Brennstoffspeicher vorgehalten werden, wodurch die Betriebskosten je Fahrzeug niedriger sind. Durch den einfachen Austausch der Brennstoffspeicher sind keine Füllvorrichtungen nötig. Die Brennstoffspeicher können einfach verteilt und gelagert werden, so dass weite Fahrwege zu Füllstationen entfallen.

Weiterhin ist es vorteilhaft, wenn für verschiedene Fahrzeuge einer Flotte von Flurförderzeugen, insbesondere solche unterschiedlicher Bauart, identische Brennstoffspeicher vorgehalten werden. Dadurch ist ein freier Austausch der Brennstoffspeicher zwischen den Fahrzeugen einer Flotte möglich, was die Lagerhaltung der Brennstoffspeicher vereinfacht. Sind in einer Flotte auch Fahrzeuge mit Verbrennungsmotoren, die zum Betrieb mit den in den Brennstoffspeichern vorgehaltenen Brennstoffen geeignet sind, vorhanden, so können auch diese mit Brennstoff aus den Wechselspeichern betrieben und so die Versorgung weiter vereinfacht werden.

Weitere Vorteile und Einzelheiten der Erfindung werden anhand des in der schematischen Figur dargestellten Ausführungsbeispiels näher erläutert. Diese zeigt einen erfindungsgemäßen Industrieschlepper 1. Ein Rahmen 2 trägt die wesentlichen Elemente des Fahrzeugs 1. Dies sind die lenkbare Vorderache 3, die Hinterachse 4 mit den nicht dargestellten elektrischen Antriebsmotoren, eine Anhängevorrichtung 5, eine Lasttrageplattform 6, sowie eine ebenfalls nicht dargestellte Vorrichtung zur Steuerung der elektrischen Funktionen, wie beispielsweise der Fahrantriebsmotoren. Die Bedienperson sitzt in einer Fahrerkabine 7 und steuert von dort das Fahrzeug 1. An der Anhängevorrichtung 5 können Wagen zum Transport von Lasten angehängt und so mit dem Fahrzeug 1 geschleppt werden. In dem Raum zwischen den Achsen 3, 4 unterhalb der Lasttrageplattform 6 ist ein Brennstoffzellensystem 8 angebracht, das im Wesentlichen aus einer Brennstoffzelleneinheit 9 und einer Steuerungselektronik 10 besteht. Dahinter sind zwei Brennstoffbehälter 11 angeordnet. Für die Steuerungs- und Überwachungsfunktionen des Brennstoffzellensystems 8, die von der Bedienperson in der Fahrerkabine 7 wahrgenommen werden, sind entsprechende, hier nicht dargestellte Anschlüsse und Leitungen vorhanden. Die einzelnen Komponenten des Brenntoffzellensystems 8 sowie die Brennstoffbehälter 11 sind nach dem Stand der Technik für den jeweiligen Brennstoff ausgebildet; so kann beispielweise bei Wasserstoffbetrieb der Brennstoffbehälter 11 als Tieftemperatur-Drucktank oder als Metallhydridspeicher ausgeführt sein. Bei Betrieb mit bei Raumtemperatur flüssigen Brennstoffen, wie beispielsweise Methanol, können die Brennstoffbehälter 11 relativ einfach ausgebildet sein. Dafür ist in diesem Fall bei Verwendung konventioneller Brennstoffzellen ein so genannter Reformer zur Zerlegung des Brennstoffes in in der Brennstoffzelle umsetzbare Moleküle erforderlich, der zusätzlichen Platz beansprucht.

Durch den Einsatz so genannter Direktbrennstoffzellen, bei denen der Reformer zur Zerlegung des Brennstoffes nicht benötigt wird, können auch bei Einsatz von Methanol als Brennstoff kompakte Abmessungen erreicht werden.

Ist einer der Brennstoffspeicher 11 leer, so kann dieser entweder über eine Betankungsvorrichtung 12 wieder befüllt oder ausgetauscht werden. Der Austausch wird im Ausführungsbeispiel mit einer Spezialvorrichtung oder einem Gabelstapler oder Hubwagen mit einer speziellen Lastaufnahmevorrichtung zur Seite hin vorgenommen. Die hier nicht dargestellten Anschlüsse zwischen Brennstoffspeicher 11 und Fahrzeug 1, wie beispielsweise Brennstoffleitung und elektrische Leitungen zur Überwachung und Steuerung des Brennstoffspeichers 11 sind nach dem Stand der Technik so ausgeführt, dass diese einfach zu trennen und zu verbinden sind. Vorzugsweise wird aus Sicherheitsgründen eine automatische Trennung erfolgen, wenn die Möglichkeit der Entnahme des Brennstoffspeichers besteht. Dies kann beispielsweise mit dem Öffnen einer Abdeckhaube 13 oder von hier nicht dargestellten Halterungen gekoppelt sein. Die Befüllung des Brennstoffspeichers 11 kann direkt an der Austauschstation vorgenommen werden, wenn entsprechende Anlagen vorhanden sind. Da der Befüllvorgang weniger Zeit in Anspruch nimmt als die Betriebszeit des Flurförderzeugs 1 beträgt, ist mit 2 Brennstoffspeichern 11 ein praktisch nur durch den Wechsel der Brennstoffspeicher 11 unterbrochener Betrieb möglich. Bei einer Flotte von Flurförderzeugen ist dieses Verfahren noch vorteilhafter. Hierbei werden weniger als zwei Brennstoffspeicher pro Flurförderzeug benötigt, womit die Kosten pro Fahrzeug deutlich niedriger als bei einem Einzelfahrzeug liegen. Besonders vorteilhaft ist das erfindungsgemäße Verfahren jedoch auch, wenn sich die Abfüllstation für die leeren Brennstoffspeicher nicht am Einsatzort des Flurförderzeugs befindet. Da die Brennstoffspeicher einfach zu transportieren, zu lagern und auszutauschen sind, können diese an beinahe beliebiger Stelle gelagert werden und somit der Austausch direkt am Einsatzort des Flurförderzeugs vorgenommen werden, während sich die Abfüllstation in großer räumlicher Entfernung befinden kann. Die Befüllung kann beispielsweise von darauf spezialisierten Betrieben mit entsprechend großen und leistungsfähigen Anlagen vorgenommen werden, die auch die Wartung der Brennstoffspeicher übernehmen und somit den Betreiber des Flurförderzeugs von diesen Aufgaben entlasten. Besonders effektiv ist dieses Verfahren, wenn die Fahrzeuge einer Flotte, auch wenn es sich dabei um ganz verschiedene Fahrzeugtypen, wie beispielsweise Industrieschlepper, Gabelstapler und Hubwagen handelt, mit identischen Brennstoffspeichern betrieben werden können. Die Identität der Brennstoffspeicher bezieht sich dabei vor allem auf die Anschlüsse für den Brennstoff und für die Leitungen zur Steuerung und Überwachung des Brennstoffspeichers und die mechanischen Halterungen, während die für den Betrieb der Flurförderzeuge nicht relevanten Größen, wie der innere Aufbau, der verwendete Brennstoff oder die Fassungskapazität durchaus variieren können. Aufgrund der freien Austauschmöglichkeit der Speicher ist ein flexibler Einsatz in den verschiedenen Fahrzeugen einer Flotte möglich. Dadurch verringert sich der Aufwand bei der Lagerhaltung erheblich. Auch die Wartung ist gegenüber einer Vielzahl unterschiedlicher Speichertypen erheblich vereinfacht.

Die Anbringung des Brennstoffspeichers 11 ist selbstverständlich von der Bauart des Flurförderzeugs 1 abhängig und kann demzufolge bei anderen Typen von Flurförderzeugen, beispielsweise Gegengewichtsgabelstaplern, in anderer Weise als im gezeigten Ausführungsbeispiel ausgeführt sein.

Im gezeigten Ausführungsbeispiel verfügt der Schlepper 1 über 2 austauschbare Brennstoffspeicher 11. Es sind jedoch auch Ausführungsformen denkbar, bei denen neben dem mindestens einen austauschbaren Brennstoffspeicher 11 ein oder mehrere Brennstoffspeicher fest im Fahrzeug installiert sind. Dies kann von Vorteil sein, wenn eine Befüllmöglichkeit am Einsatzort des Flurförderzeugs 1 vorhanden ist und der Betrieb des Flurförderzeugs 1 hinreichend lange Betriebspausen zum Befüllen dieser Speicher erlaubt. Dadurch entfallen die lösbaren Verbindungen der Leitungen, was Bauaufwand und Herstellkosten des Fahrzeugs 1 reduziert. Ein fest installierter Speicher kann beispielsweise auch als Reservespeicher dienen, um die Rückkehr des Flurförderzeugs 1 zu einer Austauschstation zu ermöglichen und entsprechend klein ausgeführt sein. Besonders bei einem Reservespeicher ist auch eine Befüllung über den austauschbaren Hauptspeicher 11 denkbar.

Im gezeigten Ausführungsbeispiel wird der Brennstoff zunächst einem der beiden Speicher 11 entnommen. Ist dieser leer, wird automatisch auf den noch gefüllten Speicher 11 umgeschaltet. Dies geschieht durch die Steuerungselektronik 10 ohne Zutun der Bedienperson. Am Fahrerplatz 14 wird der gewählte Speicher 11 angezeigt. Zudem sind Füllstandsanzeigen oder Anzeigen für leere Speicher 11 vorhanden, damit die Bedienperson weiß, welcher der Speicher 11 ausgetauscht oder befüllt werden muss. Es sind auch Ausführungsformen denkbar, bei denen die Bedienperson die Umschaltung beziehungsweise Auswahl des oder der aktiven Brennstoffspeicher 11 selbst vornimmt.

Bei einer nicht erfindungsgemäßen Ausführung mit mehreren Speichern 11 ist es auch möglich, die Speicher 11 mit verschiedenen Brennstoffen zu befüllen. So können beispielsweise ein Methanolspeicher und ein Wasserstoffspeicher vorgesehen sein. Wasserstoff eignet sich insbesondere beim Dauereinsatz in Innenräumen, da dabei keine schädlichen Emissionen auftreten. Wird das Fahrzeug 1 auch im Freien eingesetzt, so sind größere Fahrstrecken zu erwarten und dadurch ein häufigeres Nachtanken nötig. Dies erfordert bei Verwendung von Methanol, das bei Raumtemperatur flüssig ist, weniger aufwändige Vorrichtungen, beispielsweise bei Speicherbehältern 11 und Anschlussleitungen, und ist einfacher und schneller durchzuführen als bei Wasserstoffbetrieb. Daher kann beispielsweise der Methanolspeicher auch fest installiert und lediglich der Wasserstoffspeicher 11 einfach austauschbar sein. Die Umschaltung kann auch hier durch die Bedienperson oder automatisch, beispielsweise beim Durchfahren eines Gebäudetors ausgelöst, vorgenommen werden.

In einer anderen Ausführungsform wird das Flurförderzeug 1 im Normalbetrieb aus einem der beiden Brennstoffspeicher 11 betrieben. Bei besonders hohen Leistungsanforderungen und daher großem Brennstoffbedarf wird zusätzlich der zweite Brennstoffspeicher 11 aktiviert, so dass eine größere Menge an Brennstoff zur Verfügung steht. Die Zuschaltung des zweiten Brennstoffspeichers 11 kann ebenfalls durch die Bedienperson oder automatisch vorgenommen werden.

In einer weiteren Ausführungsform wird das Flurförderzeug 1 im Normalbetrieb aus beiden Brennstoffspeichern 11 zugleich betrieben. Dies ist der einfachste Aufbau bei der Verwendung von zwei Brennstoffspeichern 11.

Die Auswahl, welche der vorgenannten Möglichkeiten der Aktivierung der Brennstoffspeicher 11 genutzt wird, ist bei einer entsprechenden Gestaltung der Bedienelemente, Zuleitungen und Steuereinrichtungen lediglich von der Programmierung der Steuerungselektronik 10 abhängig. Dadurch ist es möglich, je nach Betriebsbedingungen oder Ausrüstung des Flurförderzeugs 1 zwischen diesen Möglichkeiten zu wechseln und dieses so optimal an die Anforderungen anzupassen.

Bei mehr als zwei Brennstoffspeichem 11 sind sinngemäß die gleichen Betriebsmöglichkeiten bei der Auswahl der aktiven Speicher 11 gegeben, also beispielsweise der gleichzeitige Betrieb aller Speicher 11 oder nur eines Speichers 11 oder einer beliebigen Anzahl von Speichern 11.

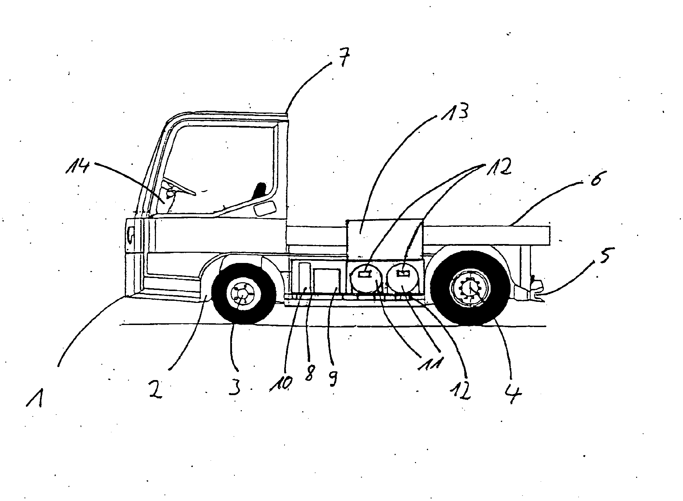

## Patentansprüche

1. Flurförderzeug (1) mit einem elektrischen Antrieb und einem Brennstoffzellensystem (8), das eine Brennstoffzelleneinheit (9) umfasst, die mit Wasserstoff als Brennstoff betrieben ist,
**dadurch gekennzeichnet,**
**dass** mindestens ein auf einfache Weise getrennt austauschbarer, als Wasserstoff-Brennstoffspeicher ausgebildeter Brennstoffspeicher (11) vorgesehen ist.

2. Flurförderzeug (1) mit einem elektrischen Antrieb und einem Brennstoffzellensystem (8) nach Anspruch 1, **dadurch gekennzeichnet, dass** mindestens zwei Brennstoffspeicher (11) vorgesehen sind, die gleichzeitig zur Brennstoffversorgung des Brennstoffzellensystems (8) verwendbar sind.

3. Flurförderzeug (1) mit einem elektrischen Antrieb und einem Brennstoffzellensystem (8) nach Anspruch 1, **dadurch gekennzeichnet, dass** mindestens zwei Brennstoffspeicher (11) vorgesehen sind, die wechselweise zur Brennstoffversorgung des Brennstoffzellensystems (8) verwendbar sind.

4. Flurförderzeug (1) mit einem elektrischen Antrieb und einem Brennstoffzellensystem (8) nach einem der Ansprüche 1 bis 3, **dadurch gekennzeichnet, dass** mindestens einer der zur Brennstoffversorgung des Brennstoffzellensystems (8) zu verwendenden Brennstoffspeicher (11) durch die Bedienperson auswählbar ist.

5. Flurförderzeug (1) mit einem elektrischen Antrieb und einem Brennstoffzellensystem (8) nach einem der Ansprüche 1 bis 4, **dadurch gekennzeichnet, dass** mindestens einer der zur Brennstoffversorgung des Brennstoffzellensystems (8) zu verwendenden Brennstoffspeicher (11) selbsttätig auswählbar ist.

6. Flurförderzeug (1) mit einem elektrischen Antrieb und einem Brennstoffzellensystem (8) nach einem der Ansprüche 1 bis 5, **dadurch gekennzeichnet, dass** die Auswahl des mindestens einen zur Brennstoffversorgung des Brennstoffzellensystems (8) zu verwendenden Brennstoffspeichers (11) in Abhängigkeit vom Füllstand mindestens eines Brennstoffspeichers (11) vornehmbar ist.

7. Flurförderzeug (1) mit einem elektrischen Antrieb und einem Brennstoffzellensystem (8) nach einem der Ansprüche 1 bis 6, **dadurch gekennzeichnet, dass** die Auswahl des mindestens einen zur Brennstoffversorgung des Brennstoffzellensystems (8) zu verwendenden Brennstoffspeichers (11) in Abhängigkeit vom Brennstoffbedarf des Brennstoffzellensystems (8) vornehmbar ist.

8. Verfahren zum Betrieb mindestens eines Flurförderzeugs (1) mit einem elektrischen Antrieb und einem Brennstoffzellensystem (8), das eine Brennstoffzelleneinheit (9) umfasst, die mit Wasserstoff als Brennstoff betrieben ist,
**dadurch gekennzeichnet,**
**dass** mindestens ein einfach sowie getrennt austauschbarer als Wasserstoff-Brennstoffspeicher ausgebildeter Brennstoffspeicher (11) am Einsatzort des Flurförderzeugs (1) vorgehalten wird.

9. Verfahren nach Anspruch 8, **dadurch gekennzeichnet, dass** eine Flotte von Flurförderzeugen (1) betrieben wird.

10. Verfahren nach Anspruch 8 oder 9, **dadurch gekennzeichnet, dass** für verschiedene Fahrzeuge (1) einer Flotte von Flurförderzeugen (1), insbesondere solche unterschiedlicher Bauart, identische Brennstoffspeicher (11) vorgehalten werden.

## Claims

1. Industrial Truck (1) having an electric drive and a fuel cell system (8) which comprises a fuel cell unit (9) which is operated with hydrogen as fuel,
**characterized**
**in that** at least one fuel accumulator (11), which can easily be replaced separately and is embodied as a hydrogen fuel accumulator is provided.

2. Industrial Truck (1) having an electric drive and a fuel cell system (8) according to Claim 1, **characterized in that** at least two fuel accumulators (11) are provided which can be used to supply fuel simultaneously to the fuel cell system (8).

3. Industrial Truck (1) having an electric drive and a fuel cell system (8) according to Claim 1, **characterized in that** at least two fuel accumulators (11) are provided which can be used to supply fuel alternately to the fuel cell system (8).

4. Industrial Truck (1) having an electric drive and a fuel cell system (8) according to one of Claims 1 to 3, **characterized in that** at least one of the fuel accumulators (11) which is to be used to supply fuel to the fuel cell system (8) can be selected by the operator.

5. Industrial Truck (1) having an electric drive and a fuel cell system (8) according to one of Claims 1 to 4, **characterized in that** at least one of the fuel accumulators (11) which is to be used to supply fuel to the fuel cell system (8) can be selected automatically.

6. Industrial Truck (1) having an electric drive and a fuel cell system (8) according to one of Claims 1 to 5, **characterized in that** the selection of the at least one fuel accumulator (11) which is to be used to supply fuel to the fuel cell system (8) can be performed as a function of the filling level of at least one fuel accumulator (11).

7. Industrial Truck (1) having an electric drive and a fuel cell system (8) according to one of Claims 1 to 6, **characterized in that** the selection of the at least one fuel accumulator (11) which is to be used to supply fuel to the fuel cell system (8) can be performed as a function of the fuel requirement of the fuel cell system (8).

8. Method for operating at least one industrial truck (1) having an electric drive and a fuel cell system (8) which comprises a fuel cell unit (9) which is operated with hydrogen as fuel,
**characterized**
**in that** at least one fuel accumulator (11), which can be replaced easily and separately and is embodied as a hydrogen fuel accumulator, is kept available at the place of use of the industrial truck (1).

9. Method according to Claim 8, **characterized in that** a fleet of industrial trucks (1) is operated.

10. Method according to Claim 8 or 9, **characterized in that** identical fuel accumulators (11) are kept available for various vehicles (1) of a fleet of industrial trucks (1), in particular such vehicles of different designs.

## Revendications

1. Chariot de manutention (1) comprenant un entraînement électrique et un système de pile à combustible (8), qui comprend une unité de pile à combustible (9) utilisant de l'hydrogène en tant que combustible,
**caractérisé en ce**
**qu'**il est prévu au moins un réservoir de combustible (11) réalisé sous forme de réservoir de combustible pour hydrogène pouvant être simplement remplacé de manière séparée.

2. Chariot de manutention (1) comprenant un entraînement électrique et un système de pile à combustible (8) selon la revendication 1, **caractérisé en ce qu'**au moins deux réservoirs de combustible (11) sont prévus, lesquels peuvent être utilisés simultanément pour l'alimentation en combustible du système de pile à combustible (8).

3. Chariot de manutention (1) comprenant un entraînement électrique et un système de pile à combustible (8) selon la revendication 1, **caractérisé en ce qu'**au moins deux réservoirs de combustible (11) sont prévus, lesquels peuvent être utilisés en alternance pour l'alimentation en combustible du système de pile à combustible (8).

4. Chariot de manutention (1) comprenant un entraînement électrique et un système de pile à combustible (8) selon l'une quelconque des revendications 1 à 3, **caractérisé en ce qu'**au moins l'un des réservoirs de combustible (11) devant être utilisés pour l'alimentation en combustible du système de pile à combustible (8) peut être sélectionné par l'opérateur.

5. Chariot de manutention (1) comprenant un entraînement électrique et un système de pile à combustible (8) selon l'une quelconque des revendications 1 à 4, **caractérisé en ce qu'**au moins l'un des réservoirs de combustible (11) devant être utilisés pour l'alimentation en combustible du système de pile à combustible (8) peut être sélectionné automatiquement.

6. Chariot de manutention (1) comprenant un entraînement électrique et un système de pile à combustible (8) selon l'une quelconque des revendications 1 à 5, **caractérisé en ce que** la sélection de l'au moins un réservoir de combustible (11) devant être utilisé pour l'alimentation en combustible du système de pile à combustible (8) peut être effectuée en fonction du niveau de remplissage d'au moins un réservoir de combustible (11).

7. Chariot de manutention (1) comprenant un entraînement électrique et un système de pile à combustible (8) selon l'une quelconque des revendications 1 à 6, **caractérisé en ce que** la sélection de l'au moins un réservoir de combustible (11) devant être utilisé pour l'alimentation en combustible du système de pile à combustible (8) peut être effectuée en fonction du besoin en combustible du système de pile à combustible (8).

8. Procédé pour faire fonctionner au moins un chariot de manutention (1) comprenant un entraînement électrique et un système de pile à combustible (8), qui comprend une unité de pile à combustible (9) utilisant de l'hydrogène en tant que combustible,
**caractérisé en ce**
**qu'**au moins un réservoir de combustible (11) réalisé sous forme de réservoir de combustible pour hydrogène pouvant être simplement remplacé de manière séparée est conservé sur le lieu d'utilisation du chariot de manutention (1).

9. Procédé selon la revendication 8, **caractérisé en ce qu'**une flotte de chariots de manutention (1) est utilisée.

10. Procédé selon la revendication 8 ou 9, **caractérisé en ce que** des réservoirs de combustible identiques (11) sont conservés pour différents véhicules (1) d'une flotte de chariots de manutention (1), en particulier ceux de constructions différentes.
